# EUROPEAN PATENT SPECIFICATION

(11) **EP 2 529 366 B1**
(45) Date of publication and mention of the grant of the patent: **09.11.2016**
(21) Application number: 11702364.8
(22) Date of filing: 27.01.2011
(51) Int. Cl.: G09F 27/00, G09F 15/02

(54) **SMART SIGN BOX USING ELECTRONIC INTERACTIONS**
INTELLIGENTE SCHILDERBOX MIT ELEKTRONISCHEN INTERAKTIONEN
BOÎTIER D'ENSEIGNE INTELLIGENT UTILISANT DES INTERACTIONS ÉLECTRONIQUES

(30) Priority: 29.01.2010 US 299609 P; 08.03.2010 US 311473 P
(43) Date of publication of application: 05.12.2012
(60) Divisional application: 16002075.6
(73) Proprietor: Avery Dennison Corporation, Pasadena, CA 91103 (US)
(72) Inventor: FORSTER, Ian, J., Chelmsford Essex CM16LA (GB); WELCH, David, Crewkeme Somerset TA18 7SB (GB); WANG, Haochuan, S. Pasadena, CA 91030 (US); VENKATASANTHANAM, Sriram, Chino Hills, CA 91709 (US); CHAPMAN, Steven, R., Glenview, IL 60025 (US)
(74) Representative: Müller-Boré & Partner Patentanwälte PartG mbB
(86) International application number: PCT/US2011/022680
(87) International publication number: WO 2011/094384

(56) References cited:
- CN-Y- 201 302 803
- JP-A- 2006 011 422
- JP-A- 2006 030 882
- JP-A- 2006 058 435
- US-A1- 2007 029 939

## Description

### Technical Field of the Invention

The present inventive subject matter relates generally to the art of graphic displays and/or signage.

### Background of the Invention

Illuminated signage and/or graphic displays are generally known. Commonly, illuminated signage will include graphic media, e.g., such as paper or polymeric film having a desired image thereon, that is illuminated from the back or the front or in some instances the side or edge. In general, backlight or backlit applications are those in which the media is illuminated from the side of the media that is opposite the side from which the media is intended to be viewed, while front-tight or front-lit applications are those in which the media is illuminated from the same side in which the media is intended to be viewed. In side or edge-lit applications, the graphic media is generally mounted to a pane of glass or other suitable light guide which is illuminated from the edge or side. In turn, the pane of glass or other suitable light guide directs the light onto and/or through the graphic media.

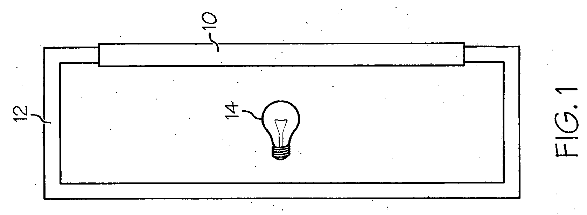

In backlight applications, the graphic media is typically transparent, semitransparent or translucent. FIGURE 1 shows a typical backlight application for illuminated signage. In particular, a graphic media 10 (e.g., having text, images, graphics or the like depicted or otherwise formed thereon) is held within a box or frame 12 or the like which contains a light source 14 that illuminates the graphic media 10 from behind, i.e., from the side of the media opposite the side intended for viewing. While such backlit signs or displays are generally acceptable, they do have certain limitations and/or drawbacks. For example, often such signs or displays are generally static or non-responsive to external stimuli. In many cases, there is no security feature to regulate the use of graphic media in the sign or display.

JP 2006 011422 A discloses poster units, which are arranged on both sides of a display/operation unit. Posters are stuck to the poster sticking surfaces of the poster units and when an IC tag reader reads the IC tag of each poster, a display/operation unit acquires the detailed information on the poster from a server. When a user stands near the poster unit to which an interesting posture is stuck, a customer sensor detects the user and the display/operation unit displays the detailed information of the poster on either one of the displays. When the user stands on the side of the display/operation unit, the detailed information is displayed on the lower display. When another user stands behind the former user, the detailed information is displayed on the upper display.

Accordingly, a new and/or improved media, display and/or method for using the same are disclosed which addresses the above-referenced problem(s) and/or others.

### Brief Summary of the Invention

The embodiments of the present invention described below are not intended to be exhaustive or to limit the invention to the precise forms disclosed in the following detailed description. Rather, the embodiments are chosen and described so that others skilled in the art may appreciate and understand the principles and practises of the present invention.

In accordance with one embodiment, an advertising system is described and includes a graphic supporting frame having an activatable light source. An advertising graphic having printed or imaged indicia is provided in connection with a marketing or advertising campaign. A RFID inlay is provided on the advertising graphic, the inlay includes a substrate having first and second surfaces, with an antenna and a chip disposed on the first surface. The chip is encoded with information
relating to the advertising graphic. An activator is used for activating and reading the chip on the RFID inlay and for causing a first signal to be sent to the graphic supporting frame. A processor is provided for receiving the first signal and for transmitting a second signal to the activator.

In accordance with another embodiment, an advertising graphic having a graphic media with a printable surface. A RFID inlay is associated with the advertising graphic, the RFID inlay has a surface with a chip and antenna provided thereon. The RFID inlay is attached to the graphic media, the chip of the RFID inlay including information relating to the graphic media and an advertising message provided on the graphic media and matching to information contained on the chip on the RFID inlay.

In a yet still further exemplary embodiment of the presently described invention, a method of using an advertising system. The method includes the steps of initially providing a frame that has an illumination source, RFID reader and controller connected to the RFID reader. Then, producing a replaceable graphic, the graphic having advertising and/or marketing information provided on a surface of the graphic. Next, a RFID inlay is associated with the replaceable graphic, the RFID inlay having a chip encoded with product information and illumination instructions. Once an individual is sensed as being near the frame, the illumination source is increased in connection with the illumination instructions provided on the chip. If the individual has a mobile communication device, the device is positioned near the frame and the information encoded on the chip on the RFID inlay is read which generates information on the mobile communication device for the user to act on.

The foregoing embodiment, may also include the further steps of unlocking the display so as to be able to remove the replaceable graphic and providing an authentication code on the RFID chip. Reading the authentication code can enable the appropriate user to remove the replaceable graphic.

Numerous other features and advantages of the present invention will become apparent to those skilled in the art from the following detailed description. It is to be understood, however, that the detailed description of the various embodiments and specific examples, while indicating preferred and other embodiments of the present invention, are given by way of illustration and not limitation. Many changes and modifications within the scope of the present invention may be made.without departing from the spirit thereof, and the invention includes all such modifications.

### Brief Description of the Drawings

The inventive subject matter disclosed herein may take form in various components and arrangements of components, and in various steps and arrangements of steps. The drawings are only for purposes of illustrating preferred embodiments and are not to be construed as limiting. Further, it is to be appreciated that the drawings may not be to scale.
FIGURE 1 is a diagrammatic illustration showing a conventional backlit display.
FIGURE 2 is a diagrammatic illustration showing an exemplary backlit display in accordance with aspects of the present inventive subject matter.
FIGURE 3 is a diagrammatic illustration showing an exemplary edge-lit display configuration suitable for practicing aspects of the present inventive subject matter.
FIGURE 4 is a diagrammatic illustration showing an exemplary configuration of a power supply for the display shown in FIGURE 2.
FIGURE 5 is a diagrammatic illustration showing an exemplary display configuration in accordance with aspects of the present inventive subject matter, including an optional mirror or half-mirror cover.
FIGURE 6 is a diagrammatic illustration showing an exemplary display configuration in accordance with aspects of the present inventive subject matter, including an optional shutter.
FIGURE 7 is a diagrammatic illustration showing an exemplary display configuration in accordance with aspects of the present inventive subject matter, including an optional variable information display unit.

### Detailed Description of the Embodiments

The apparatuses and methods disclosed in this document are described in detail by way of examples and with reference to the figures. Unless otherwise specified, like numbers in the figures indicate references to the same, similar, or corresponding elements throughout the figures. It will be appreciated that modifications to disclosed and described examples, arrangements, configurations, components, elements, apparatuses, methods, materials, etc. can be made and may be desired for a specific application. In this disclosure, any identification of specific shapes, materials, techniques, arrangements, etc. are either related to a specific example presented or are merely a general description of such a shape, material, technique, arrangement, etc. Identifications of specific details or examples are not intended to be, and should not be, construed as mandatory or limiting unless specifically designated as such. Selected examples of apparatuses and methods are hereinafter disclosed and described in detail with reference made to FIGURES.

In general, there is disclosed herein a graphic display and/or illuminated sign. In particular, the display or sign holds or otherwise supports a graphic media intended to be viewed, e.g., by the public or some other desired audience. Suitably, the graphic media is, e.g., a paper, metal foils or films, or polymeric film having a desired image printed, laminated or otherwise formed thereon. The image may also be formed by perforating the film or foil using different perforation sizes or patterns to create the image. For example, the image may include, without limitation, text, graphics, photographic images and/or combinations of any of the foregoing. Depending on the application, the graphic media may be transparent, semi-transparent or translucent. The image may be multi-color, black and white or otherwise monotone.

In practice, the graphic media is selectively mounted in, on or to the display/sign, and from time-to-time can be changed as desired by a user of the display/sign. That is to say, one graphic media, e.g., having a first image printed or formed thereon, can be exchanged for another graphic media, e.g., having a second image printed or formed thereon or to inform the viewer of a change in condition, such as a sale or other promotion. That is, the image may remain the same but additional information may be provided with the original graphic. In this way, the display/sign can be updated or changed as desired by the user to present various different graphic media to the target audience. For example, the display/sign may be used to provide advertising that user may wish to change from time-to-time. Accordingly, rather than replacing the entire display or sign, the user merely replaces the graphic media mounted thereto or otherwise held thereby.

Suitably, when mounted in, on or to the display or sign, the graphic media is selectively illuminated by one or more light sources. Optionally, the display or signage may be implemented as a backlit application, a front-lit application or a side or edge-lit application. The light source optionally comprises a light emitting diode (LED) or a collection of multiple LEDs. The LEDs can be conventional LEDs or organic LEDs. Alternately, other electroluminescent material can be employed as the light source or other conventional light sources may be employed, e.g., incandescent or fluorescent lighting. Optionally, a plurality of light sources are provided which each emit light at a different wavelength or a single light source is provided which is capable of emitting light at a plurality of different wavelengths. In one embodiment, the light source includes one or more layers or elements which produce different wavelengths of light. Suitably, by appropriate control of the light source or sources, the color and/or wavelength of the illumination can therefore be selected as desired. In one exemplary embodiment, the intensity of the illumination is also able to be selectively controlled.

In a suitable embodiment, one or more of a variety of power sources are optionally included to provide electrical power for the display/sign, e.g., to selectively power the light source or other electronic components. In one embodiment, the power source may be a solar cell or other like photovoltaic element. In another embodiment, the power source may be a battery, e.g., which may be rechargeable. Alternately, electrical power can be obtained for the display or sign via a conventional wall outlet or other like source operatively connected to an electrical mains or conventional power grid. In still another embodiment, electrical power is supplied to the display or signage via an equipped coil or loop of conductive wire or the like which is inductively or magnetically coupled, e.g., to an external drive circuit or the like. Suitably, an AC (alternating current) power signal is picked up from the drive circuit by the inductively and/or magnetically coupled conductive coil or loop equipped on or in the display/sign. Optionally, the power may be rectified and/or otherwise conditioned prior to its delivery to the tight source and/or other electronic components of the display/sign. If a rechargeable battery is employed, optionally, it may be recharged via a photovoltaic or other suitable source, e.g., such as those mentioned herein.

The display or sign is also optionally equipped with an RFID (Radio Frequency IDentification) reader or other like communication device such as a near field communication device (NFC). Suitably, the reader is provisioned to communicate with an RFID device carried by the graphic media. Optionally, the RFID device carried by the graphic media is position thereon, so that when the graphic media is installed in or on the display/sign, the RFID device is sufficiently close to the reader (or an antenna thereof) to permit communication to be established between the RFID device and the reader. While referred to herein as a reader, it is to be appreciated that optionally the reader may also may selectively write and/or up-load data or information to the RFID device and/or program the RFID device.

For example, the RFID device may be integrated on or into the media itself or it may be implemented as a label or sticker which is applied to the media. Although the description herein mainly references RFID technology, it is to be appreciated that smartcard technology and/or other like technologies (e.g., that may be based on contact reading and writing of electronic information) are also contemplated and may be utilized for alternate embodiments in appropriate circumstances. However, the advantage of RFID technology and/or similar wireless communication technologies is that it provides greater freedom or leeway in the positioning of the RFID or other like device on the graphic media.

Suitably, the display and/or sign also includes a controller that regulates and/or otherwise controls operation of the display/sign. In one embodiment, the controller selectively controls the light source, e.g., to turn the illumination on or off, to control or vary the color or wavelength of emitted illumination, to control or vary the intensity of the illumination, etc. Optionally, the controller is in operative communication with and/or responsive to the reader, and accordingly controls operation of the display/sign based upon data, information and/or other communications received from the RFID device.

In one suitable embodiment, the RFID device is loaded with and/or otherwise contains authentication data. For example, the authentication data ensures that the graphic media is authentic or genuine. Optionally, upon verification of the authentication data obtained from the RFID device by the reader, the controller enables operation of the display/sign. Alternately, if no valid authentication data is obtained, the controller may disable operation of the display/sign, e.g., by interrupting the delivery of electrical power to the light source or otherwise turning the light source off. Optionally, in response to the detection of authentication data from the RFID device, the controller may control a magnetic or other like lock which protects against unauthorized removal or installation of media.

In another suitable embodiment, the RFID device is loaded with and/or otherwise contains data or information related to illumination characteristics. For example, the data or information may indicate what color, wavelength or intensity or other characteristic of illumination is desired for the particular graphic media on which the RFID device is carried. Accordingly, the reader obtains this information from the RFID device and in turn the controller regulates the light source to achieve the indicated illumination characteristics. In other words, depending on the image depicted by the graphic media or the desired effect one wishes to achieve with the illumination, the RFID device is loaded with data or information indicating suitable illumination characteristics that meet the desired criteria, e.g., the color or wavelength of the illumination, the intensity of the illumination, etc. Of course, for different media or different media content or for different desired effects the RFID device can be selectively loaded or otherwise provisioned with different data or information indicating different desired illumination characteristics. Consequently, when the media carrying the RFID device is installed in or on the display, the reader obtains the data/information and the controller regulates the light source accordingly to achieve the characteristic illumination and/or desired effects specific to the particular media installed in or on the display.

Optionally, the illumination is actively controlled and the RFID device may be provisioned with information or data indicating the desired control sequence or control options or control responses to be executed in response to detected stimuli in order to achieve a desired effect for the particular media carrying the-RFID device. For example, via appropriate control of the light source by the controller, the illumination may be cycled or otherwise varied through an array of different colors or wavelengths or the intensity of the illumination may be cycled or varied through an array of different levels. For example, in response to an internal or other clock, the controller may selectively turn the illumination on and off, e.g., such that the signage is illuminated during evening or otherwise dark hours and is not illuminated during daytime or light hours, and thusly the display conserves power. Alternately, the display may be equipped with an ambient light sensor and the controller programmed or otherwise provisioned to turn the illumination on when the detected ambient light falls below a set or otherwise determined threshold, while otherwise leaving or turning off the illumination when the detected ambient light remains or rises above the threshold. In yet another embodiment, the intensity of the illumination from the light source can be controlled by the controller in response to the ambient lighting conditions detected by the light sensor.

In yet another embodiment, the display is optionally equipped or otherwise provisioned with a passive infrared (PIR) sensor or other motion sensor to detect the presence of individuals near the display. Accordingly, the controller can then operate the display in response to the detection of a nearby person or persons. For example, the light source can be turned on or the illumination intensity increased when an individual or audience is detected and the light source can be turned off or the illumination intensity decreased when nobody is detected, thusly the display conserves power when it is not being viewed.

In one suitable option, the light source may provide illumination outside the visible wavelength, e.g., such as UV (ultraviolet) or IR (infrared) illumination. In turn, the graphic media may be printed with a fluorescent ink or otherwise provided with fluorescent material that glows or fluoresces in response to the foregoing illumination. In this way, the visual appeal may be enhanced and/or the appearance of motion may be provided.

In yet another embodiment, an RFID or other like device carried by the media may be programmed or otherwise provisioned to communicate with viewers' mobile phones and/or other communication devices (e.g., a personal digital assistant (PDA) or the like) carried by viewers of the display/sign, for example, using the Near Field Communication (NFC) standard or another suitable standard. Accordingly, for example, when a mobile phone or other device with an integrated NFC or like reader is placed near the RFID or other like device carried on or by the media, it will download content, e.g., relevant to the media, such as data, music or a video or a discount coupon for a product advertised by the media, etc.

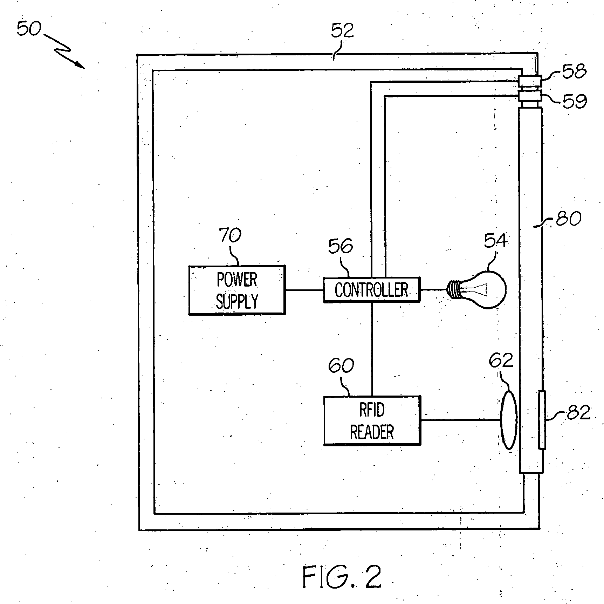

With reference now to FIGURE 2, there is shown an exemplary configuration for an illuminated sign or display 50 suitable for practicing aspects of the present inventive subject matter. As shown, the display 50 includes a box or frame 52 which holds or otherwise supports a selectively replaceable graphic media 80, e.g., carrying an RFID communication device 82. Optionally, the media 80 is mounted to or supported on or next to a major surface of a pane of glass or other like light transmitting material. In the box or frame 52 or otherwise behind the media 80, the display 50 includes is a light source 54 that selectively illuminates the media 80 from a backside or rear thereof. That is to say, the media 80 is illuminated from the side thereof which is opposite the side of the media 80 from which the media 80 is intended to be viewed. In any event, while the illustrated embodiment depicts a backlit application, it is to be appreciated that the present inventive subject matter is equally amenable to a front-lit or edge-lit application. Accordingly, the light source 54 may alternately be arranged on the front side of the media 80 or at some location along the edge of the media 80.

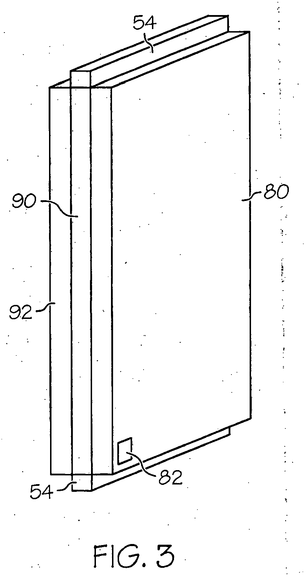

For example, FIGURE 3 shows an exemplary edge-lit configuration. In the illustrated configuration, the media 80 is supported on a first major surface of a pane of glass or other suitable light guide 90, and the light source 54 includes two sources arranged at the edges or sides of the light guide 90. Optionally, a light scattering and/or reflective film or laminate 92 is support on a second major surface of the light guide 90, opposite the first major surface. Accordingly, illumination from the light source 54 is launched into the light guide 90 and in turn directed therethrough to the graphic media 80 to illuminate the media.

Suitably, the graphic media 80 is, e.g., a paper, foil or polymeric film or laminate having a desired image or content printed or otherwise formed thereon. For example, the image may include, without limitation, text, graphics, photographic images and/or combinations of any of the foregoing. Depending on the application, the graphic media 80 may be transparent, semi-transparent or translucent. The image or content may be multi-color, black and white or otherwise monotone. In addition, the graphic or image for the graphic may be formed by creating a pattern of perforations, holes, slits which may be of a similar or different shape. In addiction, a printed image can be combined with a perforation pattern.

For clarity and simplification, the light source 54 has been illustrated as a single element in FIGURE 2. However, as described above, the light source 54 may in practice be composed of multiple elements or sources. For example, the light source 54 optionally comprises an LED or a collection of multiple LEDs. The LEDs can be conventional LEDs or organic LEDs. Alternately, other electroluminescent material can be employed as the light source 54 or other conventional light sources may be employed, e.g., incandescent or fluorescent lighting. Optionally, a plurality of light sources are provided which each emit light of a different wavelength or color or a single light source is provided which is capable of selectively emitting light at a plurality of different wavelengths. Accordingly, by appropriate control of the light source 54, the color and/or wavelength of the illumination can therefore be selected as desired.

As shown in FIGURE 2, the display 50 also includes a controller 56, an RFID reader 60 (including an antenna 62) and an electrical power supply 70. Suitably, the power supply 70 provides electrical power for the light source 54 and/or the other electronic components of the display 50. As shown, the electrical power supplied to the light source 54 is regulated by the controller 56. Accordingly, the controller 56 is able to selectively turn the light source 54 on or off, and the intensity of illumination provided from the light source 54 may also be controlled by the controller 56. Additionally, the controller 56 may also selectively coritrol the color and/or wavelength of illumination provided from the light source 54. In one suitable embodiment, the light source 54 may provide illumination outside the visible wavelength, e.g., such as UV (ultraviolet) or IR (infrared) illumination. In turn, the graphic media 80 may be printed with a fluorescent ink or otherwise provided with fluorescent material that glows or fluoresces in response to the foregoing illumination. In this way, the visual appeal may be enhanced and/or the appearance of motion may be provided.

In suitable embodiments, the power supply 70 is optionally implemented in one or more of a variety of different ways. In one embodiment, the power source 70 may be a solar cell or other like photovoltaic element. In another embodiment, the power source 70 may be a battery, e.g., which may be rechargeable. Alternately, electrical power can be obtained for the display or sign 50 via a conventional wall outlet or other like source operatively connected to an electrical mains or conventional power grid. If a rechargeable battery is employed, optionally, it may be recharged via a photovoltaic or other suitable source, e.g., such as those mentioned herein.

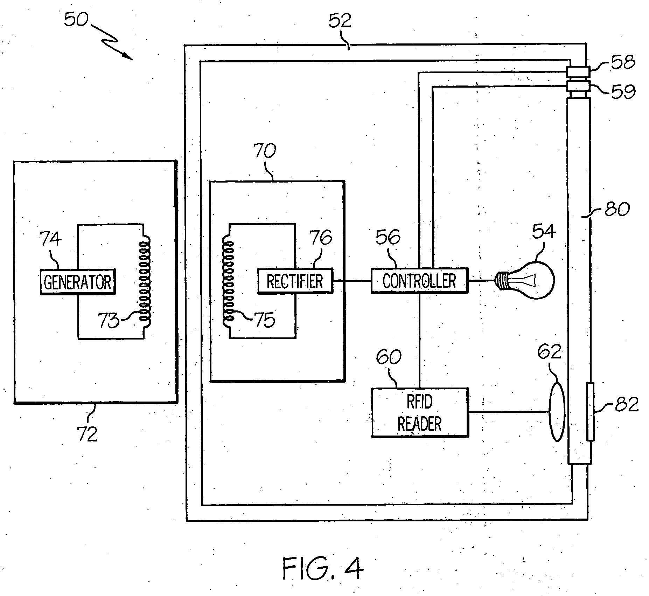

With reference to FIGURE 4, in still another embodiment, electrical power is supplied to the display 50, e.g., via an external drive circuit 72 or the like. Suitably, the external drive circuit 72 may optionally include a coil or loop of conductive wire 73 driven by a generator 74 or other suitable electric power source to produce, e.g., an AC power signal. Accordingly, the power supply 70 picks-up the AC power signal with a coil or loop of conductive wire 75 or the like which is inductively or magnetically coupled to the external drive circuit 72, e.g., via the drive circuit's coil or loop of conductive wire 73. Optionally, the power may be rectified (e.g., via a rectifier 76) and/or otherwise conditioned prior to its delivery to the light source 54 and/or other electronic components of the display/sign 50. Using a configuration such as the exemplary configuration shown in FIGURE 4, e.g., allows the display 50 to be mounted on the outside of a wall or surface with the drive circuit 72 on the other side, or placed on top of a stand with the drive circuit 72 underneath.

Returning attention to FIGURE 2, the RFID reader 60 is, as described above, operatively connected to and/or in communication with the controller 56. Again, while referred to herein as a reader, it is to be appreciated that optionally the reader 60 may also selectively write and/or up-load data or information to the RFID device 82 and/or program the RFID device 82. Optionally, the display 50 additionally includes a motion sensor 58 (e.g., such as a PIR sensor) and/or an ambient light sensor 59, either or both also being operatively connected to and/or in communication with the controller 56.

Suitably, the RFID device 82 carried by the graphic media 80 is positioned thereon, so that when the graphic media 80 is installed in or on the display/sign 50, the RFID device 82 is within range of the reader 60 (or the reader's antenna 62) to permit communication to be established between the RFID device 82 and the reader 60. Optionally, the RFID device 82 may be integratedon or into the media 80 itself, such as being laminated into the material or it may be implemented as a label or stickler which is applied to the media 80. The label or tag may be removable from the graphic so as to allow recycling.

In practice, the controller 56 is optionally implemented as a microprocessor or the like that regulates and/or otherwise controls operation of the display/sign 50. In various embodiments, the controller 56 selectively controls the light source 54, e.g., to turn the illumination on or off, to control or vary the color or wavelength of emitted illumination, to control or vary the intensity of the illumination, etc. Again, the controller 56 is optionally in operative communication with and/or responsive to the reader 60, and accordingly controls operation of the display/sign 50 based upon data, information and/or other communications received from the RFID device 82.

In one embodiment, the RFID device 82 is loaded with and/or otherwise contains authentication data. For example, the authentication data may be an otherwise secret alphanumeric code or the like that ensures that the graphic media 80 is authentic or genuine. Optionally, upon verification of the authentication data obtained from the RFID device 82 by the reader 60, the controller 56 enables operation of the display/sign 50. Alternately, if no valid authentication data is obtained, the controller 56 may disable operation of the display/sign 50, e.g., by interrupting the delivery of electrical power to the light source 54 or otherwise turning the light source 54 off. Optionally, in responses to the detection of valid or invalid authentication data from the RFID device 82, the controller 56 may control (i.e., selectively engage or disengage) a magnetic or other like lock (not shown). For example, this lock could limit access to an interior or other location or portion of the display 50 or could limit the operation of or access to manual controls, e.g., such as a master on/off or power switch.

Optionally, as described above, the RFID device 82 is loaded with and/or otherwise contains data or information related to illumination characteristics. For example, this data or information may indicate what color, wavelength or intensity or other characteristic of illumination is desired for the particular graphic media 80 on which the RFID device 82 is carried. Therefore, when the media 80 carrying the RFID device 82 is installed in the display 50, the reader 60 obtains this information from the RFID device 82 and in turn the controller 56 regulates the light source to achieve the indicated illumination characteristics. In other words, depending on the image or content on the graphic media 80 or the desired effect one wishes to achieve with the illumination, the RFID device 82 is loaded with data or information indicating suitable illumination characteristics that meet the desired criteria, e.g., the color or wavelength of the illumination, the intensity, of the illumination, etc. Of course, for different media or different media content or for different desired effects, the RFID device 82 can be-selectively loaded or otherwise provisioned with different data or information indicating different desired illumination characteristics. Consequently, when the media 80 carrying the RFID device 82 is installed in or on the display 50, the reader 60 obtains the data/information and the controller 56 regulates the light source 54 accordingly to achieve the characteristic illumination and/or desired effects specific to the particular media 80 installed in or on the display 50.

Again, as described above, the illumination is optionally actively controlled and the RFID device 82 may be provisioned with information or data indicating the desired control sequence or control options or control responses to be executed in response to detected stimuli in order to achieve a desired effect for the particular media 80 carrying the RFID device 82. For example, via appropriate control of the light source 54 by the controller 56, the illumination may be cycled or otherwise varied through an array of different colors or wavelengths or the intensity of the illumination may be cycled or varied through an array of different levels. For example, in response to an internal or other clock (not shown), the controller 56 may selectively turn the illumination on and off, e.g., such that the signage is illuminated during evening or otherwise dark hours and is not illuminated during daytime or light hours, and thusly the display 50 conserves power. Alternately, in response to the level of ambient light detected by the ambient light sensor 59, the controlled 56 may be programmed or otherwise provisioned to turn the illumination on when the detected ambient light falls below a set or otherwise determined threshold, while otherwise leaving or turning off the illumination when the detected : ambient light remains or rises above the threshold, In yet another embodiment, the intensity of the illumination from the light source 54 can be controlled by the controller 56 in response to the ambient lighting conditions detected by the light sensor 59. Optionally, the forgoing thresholds, on/off times, etc. may be values stored in the RFID device 82 or otherwise set by the controller 56 in accordance with data obtained from the RFID device 82. The RFID device and controller can be used as part of a power conversation feature as well as a security feature providing lighting during times of darkness such as at the entry of a door or the like.

In yet another embodiment, the controller 56 operates the display 50 in response to the detection of a nearby person or persons, e.g., via the motion sensor 58. For example, the light source 54 can be turned on or the illumination intensity increased when an individual or audience is detected and the light source 54 can be turned off or the illumination intensity decreased when nobody is detected, thus the display 50 conserves power when it is not being viewed.

In still another optional embodiment, an RFID device 82 carried by the media 80 may be programmed or otherwise provisioned to communicate with a viewer's mobile phone and/or other communication device (e.g., a personal digital assistant (PDA) or the like), for example, using the NFC standard or another suitable standard. Accordingly, for example, when a mobile phone or other device with an integrated NFC or like reader is placed near the RFID device 82 carried on or by the media 80, it will download content, e.g., relevant to the media, such as data, music or a video or a discount coupon for a product advertised by the media, etc.

Optionally, the RFID device 82 may be any conventional RFID device as is generally known in the art, e.g., including RFID receivers, transmitter and/or transponders (collectively referred to herein as RFID "devices"). In a suitable embodiments, the RFID device 82 may includes a number of components including an antenna for wirelessly transmitting and/or receiving RF (Radio Frequency) signals and analogand/or digital electronics operatively connected thereto. The RFID device 82 may be a so called active or semi-passive RFID device and may also include a battery or other suitable power source. In conventional parlance, the RFID electronics along with any operatively connected antenna and/or power source are collectively referred to as the RFID inlay. Exemplary RFID inlays are available from Avery Dennison RFID Company of Clinton, SC.

Suitably, the electronics are implemented via an integrated circuit (IC) or microchip or other suitable electronic circuit and may include, e.g., communications electronics, data memory, control logic, etc. In operation, the IC or microchip functions to store and/or process information, modulate and/or demodulate RF signals, as well as optionally performing other specialized functions.

As discussed above, the RFID reader 60 is generally used to wirelessly obtain data or information communicated from an RFID device 82. The manner in which the RFID reader 60 interacts and/or communicates with the RFID device 82 generally depends on the type of RFID device. Suitably, the RFID device 82 may be a passive device, an active device, a semi-passive device (also known as a battery-assisted or semi-active device).

A passive RFID device actives when the RFID reader 60 is nearby to power the RFID device 82, e.g., via wireless illumination of the RFID device 82 with an RF signal and/or electromagnetic energy from the RFID reader 60. Conversely, a semi-passive or active RFID device is provided with its own power source (e.g., such as a small battery or capacitor). To communicate, the RFID device 82 responds to queries or interrogations received from the RFID reader 60. Optionally, the response is achieved by backscattering, load modulation and/or other like techniques that are used to manipulate the RFID reader's field. Suitably, backscatter is used in far-field applications (i.e., where the distance between the RFID device 82 and reader 60 (or reader's antenna 62) is greater than approximately a few wavelengths), and alternately, load modulation is used in near-field applications (i.e., where the aforementioned distance is within approximately a few wavelengths).

Suitably, if the RFID device 82 is a passive RFID device, then it will signal or communicate its respective data or information by backscattering a carrier wave from the RFID reader 60. That is to say, in the case of a passive RFID device, in order to retrieve information therefrom, the RFID. reader 60 typically sends an excitation signal to the RFID device 82. The excitation signal energizes the RFID device 82 which transmits the information stored therein back to the RFID reader 60. In turn, the RFID reader 60 receives and decodes the information from the RFID device 82.

As mentioned earlier, a passive RFID device generally has no internal power supply, although in some instances, the device can be provided with a capacitor to store energy to allow the RFID device to have enough energy to transmit the data on the chip back to the reader. Power for operation of a passive RFID device is provided by the energy in the form of the incoming RF signal received by the RFID device 82 from the RFID reader 60. Generally, a small electrical current induced in the antenna of the RFID device 82 by the incoming RF signal provides just enough power for the IC or microchip in the RFID device 82 to power up and transmit a response. Accordingly, in this case, the antenna of the RFID device 82 is generally designed both to collect power from the incoming signal and also to transmit the outbound backscatter signal. Notably, a passive RFID device has the advantage of simplicity and long life (e.g., having no battery to go dead).

Alternately, the RFID device 82 may be an active RFID device, as opposed to passive one. Suitably, an active RFID device 82 is provisioned with its own transmitter and a power source (.e.g" a battery, photovoltaic cell, etc.). In essence, an active RFID device employs the self-powered transmitter to broadcast a signal which communicates the information stored on the IC or microchip in the RFID device. Optionally, an active RFID device will also use the power source to power the IC or microchip employed therein.

In yet another embodiments, the device 82 may be a semi-passive RFID device, which is similar to an active device in that it is provisioned with its own power source, but the battery or capacitor in this case may power the IC or microchip as well as to provide energy to broadcast the signal. Like a passive RFID device, the response from the semi-passive RFID device 82 is powered by means of backscattering the RF energy received from the RFID reader 60, i.e., the energy is reflected back to the reader 60 as with passive devices. In a semi-passive RFID device, the battery may also serve as a power source for data storage.

Optionally, the RFID device 82 operates in one of a variety of frequency ranges including, e.g., a low frequency (LF) range (i.e., from approximately 30 kHz to approximately 300 kHz), a high frequency (HF) range (i.e., from approximately 3 MHz to approximately 30 MHz) and an ultra-thigh frequency (UHF) range (i.e., from approximately 300 MHz to approximately 3 GHz). Suitably, if a passive RFID device is employed, it may optionally operate in any one of the aforementioned frequency ranges. In exemplary embodiments, for example, where a passive device 82 is employed: in a LF system, the device 82 may operate at around 124 kHz, 125 kHz or 135 kHz; in a HF system, the device 82 may operate at around 13.56 MHz; and, in a UHF system, the device 82 may use a band anywhere from 860 MHz to 960 MHz. Alternately, a passive device system may also use 2.45 GHz and other areas of the radio spectrum. If an active RFID device 82 is employed, suitably it may operate at around 455 MHz, 2.45 GHz, or 5.8 GHz, and a semi-passive device 82 may use a frequency around 2.4 GHz.

The read range of the RFID device 82 (i.e., the range at which the RFID reader.60 can communicate with the RFID device 82) is generally determined by many factors, e.g., the type of device (i.e., active, passive, etc.). For example, a passive LF RFID device (also referred to as a LF device) may be read from within approximately 12 inches (0.33 meters); a passive HF device (also referred to as a.HF device) may be read from up to approximately 3 feet (1 meter); and a passive UHF RFID device (also referred to as a UHF device) may be read from approximately 10 feet (3.05 meters) or more. One factor influencing the read range for a passive RFID device 82 is the method used to transmit data, i.e., the coupling mode between the device 82 and the reader 60 - which may optionally be inductive coupling, capacitive or radiative/propagation coupling. In the case of a passive LF device or a passive HF device, optionally inductive coupling is used between the device 82 and the reader 60. Alternately, e.g., where a passive UHF device is employed, radiative or propagation coupling may be used between the device 82 and the reader 60.

In inductive coupling applications (e.g., as may be used by a passive LF or HF device), the device 82 and reader 60 are typically each provisioned with a coil or loop antenna that together form an electromagnetic field therebetween. In inductive coupling applications, the device 82 draws power from the field, uses the power to run the circuitry on the device's IC or microchip and then changes the electric load on the device antenna. Consequently, the reader antenna 62 senses the change or changes in the electromagnetic field and converts these changes into data that is understood by the reader 60 or adjunct processor (e.g., the controller 56). Because the coil/loop in the device antenna and the coil/loop in the reader antenna 62 form an electromagnetic field therebetween in order to complete the inductive coupling between the device 82 and the reader 60, the device 82 has to be somewhat in the proximity of the reader antenna 62.

Alternately, in radiative or propagation coupling applications (e.g., as may be used by a passive UHF device), rather than forming an electromagnetic field between the respective antennas of the reader 60 and device 82, the reader 60 emits electromagnetic energy which illuminates the device 82. In turn, the device 82 gathers the energy from the reader 60 via its antenna, and the device's IC or microchip uses the gathered energy to change the load on the device antenna and reflect back an altered signal, i.e., backscatter. Suitably, if a UHF device is used, it can optionally communicate data in a variety of different ways, e.g., it can increase the amplitude of the reflected wave sent back to the reader 60 (i.e., amplitude shift keying), shift the reflected wave so it's out of phase with respect to the received wave (i.e., phase shift keying) or change the frequency of the reflected wave (i.e., frequency shift keying). In any event, the reader 60 picks up the backscattered signal (e.g., via antenna 62) and converts the altered wave into data that is understood by the reader 60 or adjunct processor (e.g., the controller 56).

The coupling of the RFID device 82 to the reader 60 can be impacted by a number of factors such as any metal in the frame of the supporting structure, moisture, the material contained in the graphic (if for example a holographic foil is used in the graphic and the like.).

In practice, the media 80 may optionally be printed and/or cut, e.g., by a print shop or the like. Suitably, it will have the RFID device 82 mounted at certain location (e.g., in a certain corner) on the media 80 which corresponds to where the antenna 62 of the reader 60 is located in the display 50. Accordingly, the media 80 after being loaded into the display or sign 50 will have the RFID device 82 in relatively close proximity to the reader 60 (or its antenna 62) such that the device is within the read range of the reader, so that they can communicate or otherwise interact. Optionally, desired data or information (e.g., authentication codes, desired illumination characteristics, etc.) may be written into the RFID device 82 at the print shop.

It is to be appreciated, the presently described authentication model serves a number of purposes to the benefit of various parties by ensuring that only authentic or genuine media 80 is used within a given display or sign 50. For example, a sign shop can sell a display or sign 50 which is operative as intended only in conjunction with media 80 bearing an RFID device 82 having the proper authentication data or credentials provisioned therein. Accordingly, the sign shop benefits from the repeat business of a sign purchaser or other user seeking to replace old media 80 with new media 80 that is also compatible (i.e., also bears an RFID device 82 with the proper authentication credentials) with a display or sign 50 previously purchased from the sigh shop. Additionally, the user benefits from knowing that the media 80 is genuine and/or authentic, and accordingly the quality of the media and/or its suitability for use in the display or sign 50 can be inferred.

In one suitable embodiment, the RFID device 82 optionally contains one or more specific authentication codes or the like. Accordingly, when the media 80 is installed in display or sign 50, the reader 60 will attempt to obtain one or more of the authentication codes. Suitably, any obtained codes are in turn passed to the controller 56 for verification of their authenticity. After processing the information, the controller 56 can decide if it allows the media 80 to be used (e.g., enables illumination of the media 80 or turns on the light source 54) or not to be used (e.g., disables illumination of the media 80 or turns off the light source 54). For example, the controller 56 optionally controls a relay, which regulates and/or controls the delivery of electrical power and/or current from the power supply 70 to the light source 54.

Optionally, the authentication code may be a fixed code that is specific to a particular media supplier or specific to a particular print or sign shop. Suitably, the print or sign shop applies the RFID device to the media 80 after printing and cutting. Accordingly, optionally, the media supplier besides supplying the rolls of media may also supply the RFID devices to be used with the media.

Of course, some users or other individuals may be tempted to circumvent the proposed authentication model described herein. For example, a user may attempt to remove an old RFID device 82 from a previously used genuine media 80 and then re-apply it to or otherwise use it along with a new potentially non-genuine media. To guard against unwanted circumvention of this type, there a number of suitable solutions. For example, the reader 60 (which also optionally functions as an RFID writer) optionally erases the authentication code from RFID device 82 after it has been read once to activate, or after a period of time has elapsed and/or otherwise enable the display or sign 50. In another embodiment, the reader 60 and/or controller 56 will allow the same code to be used some limited number of times, but after that a different code is must be obtained to enable or illuminate the display or sign 50 yet a further time, or after a set or determined number of readings, a given code can be erased or deleted. In yet another embodiment, an adhesive used to secure the RFID device 82 to the media 80 can be such that the RFID device 82 will be destroyed or damaged to the point of in operability if one attempts to remove or peel the RFID device 82 from the media 80 upon which it was originally adhered. In yet another suitable embodiment, the RFID device 82 is optionally provisioned with a set date or determined time period (e.g., about a week) or other expiration criteria (e.g., which may set and/or updated by the printer or sign shop), so that the RFID device 82 or any authentication code thereon will only work or be valid prior to and/or within the bounds of the expiration criteria. This latter method can also be used to ensure that the media 80 in the display 50 is promptly and/or otherwise regularly replaced.

Optionally, the RFID device 82 may be provisioned to wirelessly communicate and/or otherwise interact with electronic communication devices carried by viewers of the display or sign 50 or other nearby individuals: For example, using the NFC standard or the like, the display or sign 50 may selectively communicate or otherwise interact via the RFID device 82 with a NFC or similarly enatiled cell phone or other like handheld device (e.g., PDA). For example, using such a cell phone or other handheld device, a viewer can just point their cell phone or the like toward the display 50 or otherwise hold it sufficiently near the device 82, then with the RFID function, the cell phone or the like may be able to link to a website related or associated with the advertising or other content on the graphic media 80, bring up a coupon, or perform some other desired function.

Optionally, the NFC device employed for interaction with the viewers' cell phone or other like handheld device can be a separate elements or tag or label, e.g., that may be similar to but different from the device 82 that is used to authenticate the source of media 80. In this case, two devices can be used, i.e., one for authentication and one for communication with viewer devices. In one suitable embodiment, a single label can be provisioned with two RFID tags or devices. The first tag or device (i.e., device 82) is used for authentication with an authentication code, and will only interact with the reader 60 in the sign or display 50 to authenticate the printing media 80, e.g_{.}, so as to enable the sign 50 to light up. The second tag or device can be written to or provisioned, e.g., by a sign shop or other entity, to support NFC interaction with consumer electronics such as NFC enable cell phones. Accordingly, the second tag or device will only interact with consumer electronics. Optionally, the content provided by the second tag or device can be SMS (Short Message Service) code or the like which is linked to or associated with the graphical content of the media 80. Optionally, the two tags or devices can be stuck or otherwise linked together so if somebody tries to tamper with one, the other one will stop functioning. For example, the two functions carried by two tags could be placed into one chip and one tag will be used. Optionally, using an appropriate chip, one can find a space to write (and lock) the authentication code into a memory separate from the space used by the NFC function. Alternatively, if two tags are employed, one could make a special inlay with two chips connected to the same antenna; which would difficult to forge.

As pointed out earlier, the reader 60 also optionally functions to write to the RFID device so as to up-load and/or otherwise write data or information to the RFID device 82. Accordingly, the RFID device is optionally loaded (e.g., periodically or as otherwise desired) with usage information from the sign or display 50. For example, the reader 60 may optionally write back to the RFID device 82 carried by the media 80 how many hours the illumination has been active, the date and/or time when the media 80 was installed or removed, the number of times the display 50 was activated or the number of times the light source 54 was turned-on, the number of times the motion sensor 58 and/or the ambient light sensor 59 was tripped, etc. Accordingly, for example, an owner or advertiser employing the sign 50 could obtain feedback about the actual operation of the sign 50. As can be appreciated, such feedback is reasonably related to the traffic in the vicinity of the sign 50 and/or the amount or degree of exposure the installed media 80 would have to a target audience or potential viewers. Suitably, such feedback could be used as the basis for calculating and/or accessing a usage fee or the like for the display 50.

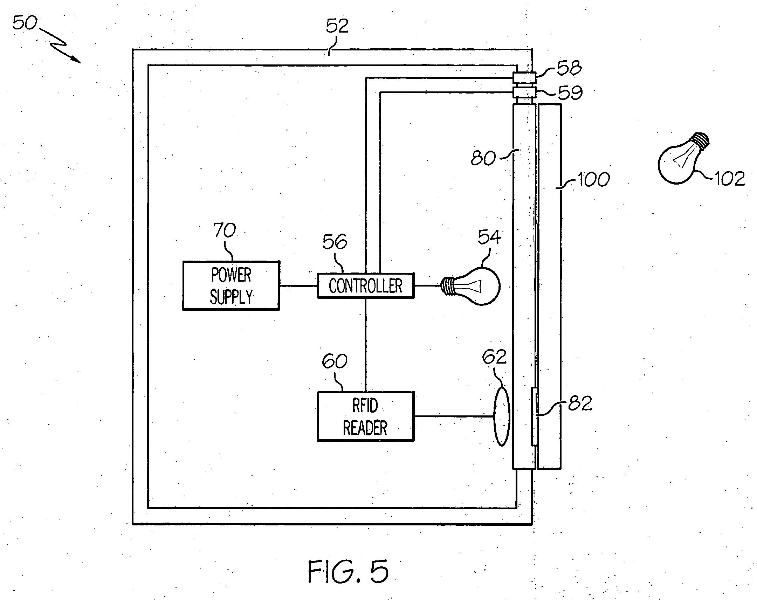

With reference now to FIGURE 5, in one optional embodiment, a mirror or half-mirror or other like cover 100 may be arranged in front of the display or sign 50, e.g., between a viewer and the graphic media 80. A second light source 102 may also optionally be positioned on the front side of the cover 100. Suitably, by controlling the relative illumination on either side of the cover 100, e.g., by controlling the light intensity from the internal light source 54 of the display 50 and the light intensity from the exterior light source 102, the effective reflectivity or reflectiveness of the cover 100 may be selectively manipulated. For example, at one extreme (e.g., with the interior light source 54 tuned off and the exterior light source 102 tuned on), the effective reflectivity or reflectiveness of the cover 100 can be maximized so that an individual viewing the display 50 perceives his own reflection, and at the other extreme (e.g., with the interior light source 54 turned on and the exterior light source 102 turned off), the effective reflectivity or reflectiveness of the cover 100 can be minimized so that an individual viewing the display 50 perceives the graphic media 80. Of course with a balance of illumination from either side of the cover 100, a viewer is optionally able to perceive both his reflection and the content of the graphic media 80. For example, the graphic media 80 may depict some apparel item such that the combination of the reflected image of the viewer and the image of the graphic media 80 combine to give the appearance of the viewer wearing the apparel item. In one suitable embodiment, the reflectivity or reflectiveness may optionally be manipulated in response to the motion sensor 58 detecting the presence of an individual in the proximity of the display 50.

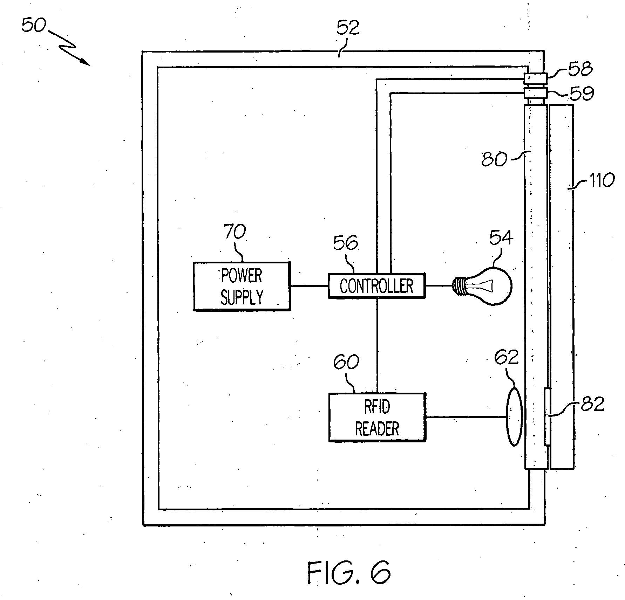

With reference now to FIGURE 6, in yet another embodiment, the display 50 is optionally equipped with a shutter 110 (optionally an electronic shutter), e.g., arranged on the front side of the media 80 (i.e., between the media 80 and potential viewers). Suitably, an electronic shutter may be implemented via, e.g., a transmissive LCD (liquid crystal display) panel. Accordingly, the LCD panel or shutter 110 or portions thereof are selectively darkened or closed to obscure the media 80 or corresponding portions thereof positioned behind the panel or shutter 110. In this manner, the media 80 or portions thereof are made selectively viewable (e.g., through the open shutter or undarkened/transmissive portions thereof) by appropriate control of the LCD panel or shutter 110. Suitably, the LCD panel or shutter 110 is powered by the power supply 70 or alternately it may be equipped with its own separate power supply. Optionally, the shutter 110 may be controlled by the controller 56 in response to data or information obtained from the RFID device 82 by the reader 60.

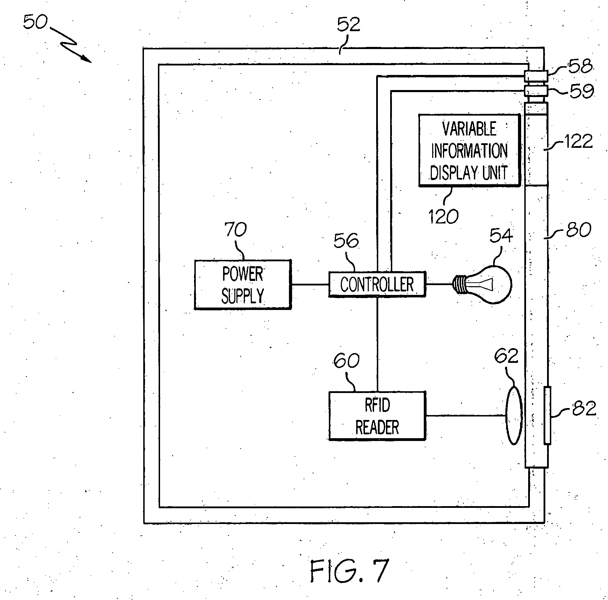

With reference now to FIGURE 7, in still another embodiment, the sign 50 optionally includes an alphanumeric of other like electronic display unit 120, e.g., to output variable data or information. For example, the display unit 120 is optionally implemented as an LCD or other electrophoretic display suitable for outputting variable information. In practice, the media 80 is optionally provisioned with an aperture or clear transmissive window 122 through which the variable information on display unit 120 can be viewed. Suitably, the variable information display unit 120 and/or the content thereon may be controlled by the controller 56, e.g., in response to data or information obtained from the RFID device 82 by the reader 60.

In any event, it is to be appreciated that in connection with the particular exemplary embodiment(s) presented herein certain structural and/or function features are described as being incorporated in defined elements and/or components. However, it is contemplated that these features may, to the same or similar benefit, also likewise be incorporated in other elements and/or components where appropriate. It is also to be appreciated that different aspects of the exemplary embodiments may be selectively employed as appropriate to achieve other alternate embodiments suited for desired applications, the other alternate embodiments thereby realizing the respective advantages of the aspects incorporated therein.

It is also to be appreciated that particular elements or components described herein may have their functionality suitably implemented via hardware, software, firmware or a combination thereof. Additionally, it is to be appreciated that certain elements described herein as incorporated together may under suitable circumstances be stand-alone elements or otherwise divided. Similarly, a plurality of particular functions described as being carried out by one particular element may be carried out by a plurality of distinct elements acting independently to carry out individual functions, or certain individual functions may be split-up and carried out by a plurality of distinct elements acting in concert. Alternately, some elements or components otherwise described and/or shown herein as distinct from one another may be physically or functionally combined where appropriate. For example, a single RFID device (such as the device 82) may optionally be provisioned with control logic or other like instructions for the operation of the sign 50, authentication data and NFC functionality. Alternately, a plurality of separate RFID or other like devices may be employed each provisioned to carry out one or more of the foregoing functions. For example, one RFID device could be provisioned with sign control logic or the like and authentication data, while a separate RFID could be provisioned to support the NFC functionality with regard to the viewers' devices.

It will thus be seen according to the present invention a highly advantageous graphic advertising system has been provided. While the invention has been described in connection with what is presently considered to be the most practical and preferred embodiment, it will be apparent to those of ordinary skill in the art that the invention is not to be limited to the disclosed embodiment, and that many modifications and equivalent arrangements may be made thereof within the scope of the invention, which scope is to be accorded the broadest interpretation of the appended claims so as to encompass all equivalent structures and products.

## Claims

1. An advertising graphic for use with an advertising system (50), comprising:
a graphic media (80) having a printable surface having images printed on it;
a RFID device (82), the RFID device (82) including a substrate having a first and specond surface with a chip and antenna (62) provided thereon, the RFID device (82) is attached to the graphic media (80), the chip of the RFID device (82) including information relating to the graphic media (80);
an activator for activating and reading the chip on the RFID device (82);
**characterized in that**
wherein the RFID device (82) is loaded with information related to illumination characteristics for the graphic media (50) for regulating a light source (54); and an advertising message
provided on the graphic media (80).

2. An advertising system, comprising:
an graphic supporting frame (52) having an activatable light source (54);
the advertising graphic of claim 1;
an activator (60) for activating and reading the chip on the RFID device (82) and for causing a first signal to be sent to the graphic supporting frame (52);

3. An advertising system as provided in claim 2 wherein
a RFID reader (60) is disposed within the frame and wherein the replaceable graphic media (80) containing a RFID device (82) which is provided with an authentication data;
the authentication data ensures that the graphic media (80) is authentic or genuine;
the RFID reader (60) having a controller (56), the RFID reader (60) detects the authentication data and then the controller (56) enables or disables operation of the advertising system (50) based on validity of the authentication data.

4. The advertising system as provided in claim 3, wherein upon receipt of the authentication data the controller (56) can lock or unlock the display (50).

5. The advertising system as provided in claim 3, wherein the illumination characteristics are selected from a group of color, wavelength, intensity or combinations thereof and/or, wherein the controller (56) controls intensity of the light source (54).

6. The advertising system as provided in claim 5, wherein the controller (56) cycles the intensity of the light source (54).

7. The advertising system as provided in claim 3, wherein, the display is provided with a motion sensor (58) to detect individuals near the display (50) and/or wherein the RFID device (82) contains product information to be read by mobile communication devices.

8. A method of using an advertising system, according to claim 2 comprising the steps of:
providing a frame (52) having a light source (54), RFID reader (60) and controller (56) connected to the RFID reader (60);
producing a replaceable graphic media (80), the graphic media (80) having advertising and/or marketing information provided on a surface of the graphic media (80);
associating a RFID device (82) with the replaceable graphic media (80), the RFID device (82) having a chip encoded with product information and illumination instructions for the graphic media (50);
sensing an individual near the frame (52);
increasing the illumination intensity of the light source (54) in connection with the illumination instructions provided on the chip;
positioning a mobile communication device near the frame (52);
reading the information encoded on the chip on the RFID device (82); and
generating information on the mobile communication device.

9. The method as recited in claim 8, wherein the step of generating information includes providing an individual with an electronic product coupon.

10. The method as recited in claim 8, wherein the step of associating the RFID inlay (82) with the replaceable graphic media (80) includes one of adhering, laminating, embedding, attaching or combinations thereof.

11. The method as recited in claim 8, wherein the step of reading provides an individual with product information relating to the graphic media (80).

12. The method as recited in claim 8, wherein the step of producing a replaceable graphic media (80) is performed by one of printing, imaging, perforating or cutting to form a visual graphic and/or wherein the step of increasing the illumination includes at least one of wavelength, color variation or combinations thereof.

13. The method as recited in claim 8, including a further step of providing a validation code on the chip of the RFID device (82).

14. The method as recited in claim 13, including a further step of reading the validation code on the chip of the RFID device (82) to unlock the frame (52).

15. The method as recited in claim 14, including a further step of removing the replaceable graphic media (80) after unlocking the frame (52).

## Patentansprüche

1. Werbegrafik zur Verwendung mit einem Werbesystem (50), umfassend:
ein grafisches Medium (80), das eine druckbare Oberfläche aufweist, die gedruckte Bilder darauf aufweist;
eine RFID-Vorrichtung (82), wobei die RFID-Vorrichtung (82) ein Substrat umfasst, das eine erste und zweite Oberfläche mit einem Chip und einer Antenne (62), die darauf vorgesehen sind, aufweist, wobei die RFID-Vorrichtung (82) an dem grafischen Medium (80) befestigt ist, wobei der Chip der RFID-Vorrichtung (82) Informationen umfasst, die sich auf das grafische Medium (80) beziehen;
einen Aktivator zum Aktivieren und Lesen des Chips auf der RFID-Vorrichtung (82);
**dadurch gekennzeichnet, dass**,
wobei die RFID-Vorrichtung (82) mit Informationen geladen ist, die sich auf Beleuchtungseigenschaften für das grafische Medium (50) zum Regulieren einer Lichtquelle (54) beziehen; und einer Werbenachricht, die auf dem grafischen Medium (80) vorgesehen ist.

2. Werbesystem, umfassend:
einen grafischen Tragrahmen (52), der eine aktivierbare Lichtquelle (54) aufweist;
die Werbegrafik nach Anspruch 1;
einen Aktivator (60) zum Aktivieren und Lesen des Chips auf der RFID-Vorrichtung (82) und zum Veranlassen, dass ein erstes Signal an den grafischen Tragrahmen (52) gesendet wird;

3. Werbesystem nach Anspruch 2, wobei
ein RFID-Lesegerät (60) innerhalb des Rahmens angeordnet ist, und wobei das auswechselbare grafische Medium (80) eine RFID-Vorrichtung (82) enthält, die mit Authentifizierungsdaten versehen ist;
die Authentifizierungsdaten gewährleisten, dass das grafische Medium (80) authentisch oder echt ist;
das RFID-Lesegerät (60) eine Steuerung (56) aufweist, wobei das RFID-Lesegerät (60) die Authentifizierungsdaten erkennt und dann die Steuerung (56) den Betrieb des Werbesystems (50) basierend auf der Gültigkeit der Authentifizierungsdaten aktiviert oder deaktiviert.

4. Werbesystem nach Anspruch 3, wobei bei Empfang der Authentifizierungsdaten die Steuerung (56) die Anzeige (50) verriegeln oder entriegeln kann.

5. Werbesystem nach Anspruch 3, wobei die Beleuchtungseigenschaften aus der Gruppe von Farbe, Wellenlänge, Intensität oder Kombinationen davon ausgewählt werden und/oder wobei die Steuerung (56) die Intensität der Lichtquelle (54) steuert.

6. Werbesystem nach Anspruch 5, wobei die Steuerung (56) die Intensität der Lichtquelle (54) taktet.

7. Werbesystem nach Anspruch 3, wobei die Anzeige mit einem Bewegungssensor (58) zum Erkennen von Personen in Nähe der Anzeige (50) versehen ist und/oder wobei die RFID-Vorrichtung (82) Produktinformationen enthält, die von mobilen Kommunikationsvorrichtungen zu lesen sind.

8. Verfahren zum Verwenden eines Werbesystems nach Anspruch 2, umfassen folgende Schritte:
Bereitstellen eines Rahmens (52), der eine Lichtquelle (54), ein RFID-Lesegerät (60) und eine Steuerung (56) aufweist, die an das RFID-Lesegerät (60) angeschlossen ist;
Herstellen eines auswechselbaren grafischen Mediums (80), wobei das grafische Medium (80) Werbe- und/oder Marketinginformationen aufweist, die auf einer Oberfläche des grafischen Mediums (80) vorgesehen sind;
Zuweisen einer RFID-Vorrichtung (82) mit dem auswechselbaren grafischen Medium (80), wobei die RFID-Vorrichtung (82) einen Chip, der mit Produktinformationen kodiert ist und Beleuchtungsanweisungen für das grafische Medium (50) aufweist;
Erfassen einer Person in Nähe des Rahmens (52);
Erhöhen der Beleuchtungsstärke der Lichtquelle (54) in Verbindung mit den Beleuchtungsanweisungen, die auf dem Chip vorgesehen sind;
Positionieren einer mobilen Kommunikationsvorrichtung in Nähe des Rahmens (52);
Lesen der Informationen, die auf dem Chip der RFID-Vorrichtung (82) kodiert sind; und
Erzeugen von Informationen auf der mobilen Kommunikationsvorrichtung.

9. Verfahren nach Anspruch 8, wobei der Schritt des Erzeugens von Informationen das Versorgen einer Person mit einem elektronischen Produktcoupon umfasst.

10. Verfahren nach Anspruch 8, wobei der Schritt des Zuweisens des RFID-Inlays (82) mit dem auswechselbaren grafischen Medium (80) entweder Kleben, Laminieren, Einbetten, Befestigen oder Kombinationen davon umfasst.

11. Verfahren nach Anspruch 8, wobei der Schritt des Lesens eine Person mit Produktinformationen versorgt, die sich auf das grafische Medium (80) beziehen.

12. Verfahren nach Anspruch 8, wobei der Schritt des Herstellens eines auswechselbaren grafischen Mediums (80) entweder ausgeführt wird durch Drucken, Bildgeben, Stanzen, oder Zuschneiden einer visuellen Grafik und/oder wobei der Schritt des Erhöhens der Beleuchtung mindestens die Wellenlänge, Farbveränderung oder Kombinationen davon umfasst.

13. Verfahren nach Anspruch 8, umfassend einen weiteren Schritt des Bereitstellens eines Validierungscodes auf dem Chip der RFID-Vorrichtung (82).

14. Verfahren nach Anspruch 13, umfassend einen weiteren Schritt des Lesens des Validierungscodes auf dem Chip der RFID-Vorrichtung (82) zum Entriegeln des Rahmens (52).

15. Verfahren nach Anspruch 14, umfassend einen weiteren Schritt des Entfernens des auswechselbaren grafischen Mediums (80) nach dem Entriegeln des Rahmens (52).

## Revendications

1. Graphique publicitaire destiné à être utilisé avec un système publicitaire (50), comprenant :
un support graphique (80) ayant une surface imprimable sur laquelle des images sont imprimées ;
un dispositif RFID (82), le dispositif RFID (82) incluant un substrat ayant une première et une deuxième surface sur lesquelles une puce et une antenne (62) sont disposées, le dispositif RFID (82) est attaché au support graphique (80), la puce du dispositif RFID (82) incluant des informations concernant le support graphique (80) ;
un activateur pour activer et lire la puce sur le dispositif RFID (82) ;
**caractérisé en ce que**
dans lequel le dispositif RFID (82) est chargé avec des informations concernant des caractéristiques d'éclairage pour le support graphique (80) pour réguler une source lumineuse (54) ; et un message publicitaire disposé sur le support graphique (80).

2. Système publicitaire, comprenant :
un cadre de support graphique (52) ayant une source lumineuse (54) pouvant être activée ;
le graphique publicitaire de la revendication 1 ;
un activateur (60) pour activer et lire la puce sur le dispositif RFID (82) et pour provoquer l'envoi d'un premier signal au cadre de support graphique (52) ;

3. Système publicitaire selon la revendication 2, dans lequel
un lecteur RFID (60) est disposé à l'intérieur du cadre, et dans lequel le support graphique (80) remplaçable contient un dispositif RFID (82) qui est muni de données d'authentification ;
les données d'authentification assurent que le support graphique (80) est authentique ou véritable ;
le lecteur RFID (60) ayant un contrôleur (56), le lecteur RFID (60) détecte les données d'authentification et puis le contrôleur (56) valide ou invalide le fonctionnement du système publicitaire (50) sur la base de la validité des données d'authentification.

4. Système publicitaire selon la revendication 3, dans lequel, à la réception des données d'authentification, le contrôleur (56) peut verrouiller ou déverrouiller l'affichage (50).

5. Système publicitaire selon la revendication 3, dans lequel les caractéristiques d'éclairage sont sélectionnées dans un groupe de couleur, de longueur d'onde, d'intensité ou de combinaisons de celles-ci et/ou dans lequel le contrôleur (56) contrôle l'intensité de la source lumineuse (54).

6. Système publicitaire selon la revendication 5, dans lequel le contrôleur (56) fait passer l'intensité de la source lumineuse (54) par des cycles.

7. Système publicitaire selon la revendication 3, dans lequel l'affichage est muni d'un capteur de mouvement (58) destiné à détecter des personnes proches de l'affichage (50) et/ou dans lequel le dispositif RFID (82) contient des informations de produits destinées à être lues par des dispositifs de communication mobiles.

8. Procédé d'utilisation d'un système publicitaire selon la revendication 2, comprenant les étapes suivantes :
fourniture d'un cadre (52) ayant une source lumineuse (54), un lecteur RFID (60) et un contrôleur (56) connecté au lecteur RFID (60) ;
production d'un support graphique (80) remplaçable, le support graphique (80) ayant des informations publicitaires et/ou de marketing disposées sur une surface du support graphique (80) ;
association d'un dispositif RFID (82) avec le support graphique (80) remplaçable, le dispositif RFID (82) ayant une puce codée avec des informations de produit et des instructions d'éclairage pour le support graphique (50) ;
détection d'une personne près du cadre (52) ;
augmentation de l'intensité d'éclairage de la source lumineuse (54) en liaison avec les instructions d'éclairage disposées sur la puce ;
positionnement d'un dispositif de communication mobile près du cadre (52) ;
lecture, sur le dispositif RFID (82), des informations codées sur la puce ; et
génération d'informations sur le dispositif de communication mobile.

9. Procédé selon la revendication 8, dans lequel l'étape de génération d'informations inclut la fourniture à une personne d'un coupon de produit électronique.

10. Procédé selon la revendication 8, dans lequel l'étape d'association de l'inlay RFID (82) avec le support graphique (80) remplaçable inclut une action parmi l'adhérence, la pelliculation, l'incorporation, l'attachement ou la combinaison de ces actions.

11. Procédé selon la revendication 8, dans lequel l'étape de lecture fournit à une personne des informations de produit concernant le support graphique (80).

12. Procédé selon la revendication 8, dans lequel l'étape de production d'un support graphique (80) remplaçable est effectuée par une action parmi l'impression, l'imagerie, la perforation ou la découpe pour former un graphique visuel et/ou dans lequel l'étape d'augmentation de l'éclairage inclut au moins un élément parmi la longueur d'onde, la variation de couleur ou des combinaisons de ceux-ci.

13. Procédé selon la revendication 8, incluant également un étape de fourniture d'un code de validation sur la puce du dispositif RFID (82).

14. Procédé selon la revendication 13, incluant également une étape de lecture du code de validation sur la puce du dispositif RFID (82) pour déverrouiller le cadre (52).

15. Procédé selon la revendication 14, incluant également une étape d'enlèvement du support graphique (80) remplaçable après le déverrouillage du cadre (52).
